# EUROPEAN PATENT SPECIFICATION

(11) **EP 1 566 952 B1**
(45) Date of publication and mention of the grant of the patent: **03.10.2007**
(21) Application number: 04004095.8
(22) Date of filing: 23.02.2004
(51) Int. Cl.: H04M 1/725

(54) **Automated switching of user notification profiles in a mobile device**
Automatisierte Umschaltung der Benutzermitteilungsprofile in einem Mobilgerät
Commutation automatisée de profils de notification d'utilisateurs dans un dispositif mobile

(43) Date of publication of application: 24.08.2005
(73) Proprietor: Research In Motion Limited, Waterloo, Ontario N2L 3W8 (CA)
(72) Inventor: Chiu, Denny, Kitchener Ontario N2N 2Z1 (CA); Hassan, Ahmed E., Waterloo Ontario N2J 4T3 (CA); Wilson, John F. Sean, Waterloo Ottawa Ontario N2K 4A6 (CA)
(74) Representative: Rickard, David John

(56) References cited:
- EP-A- 1 379 064
- WO-A-01/74011
- WO-A-03/056791
- US-A1- 2002 142 792

## Description

The present invention relates generally to mobile devices for managing events, more particularly, to notifying a user of the occurrence of a device event such as a receipt of a voice or data communication, or the occurrence of an appointment reminder, an alarm, etc.

### Description of the Related Art

Mobile devices such as wireless communications devices providing voice communications, data communications or both in a wireless communication network are increasingly prevalent in modem society. Such devices may also provide additional personal digital assistant (PDA) functions such as a calendar, alarm, contact lists, calculators, etc. The occurrence of a device event such as the receipt of a new voice or data communication, a calendar appointment reminder or an alarm is notified to the user in one or more sensory ways. These notifications typically take the form of an audible signal, a vibration, or a visual signal. In particular, audible signals from such devices often come to the attention of persons other than the users of the devices and may be distracting or otherwise annoying to those other persons. There are certain situations where a mobile handheld user may like to disable at least the notification feature of the user's handheld device for a period of time and then re-enable the device for use. Unfortunately, the user may forget to disable or re-enable the device. An example may illustrate these situations. Consider a forgetful user attending a movie theatre. Should the user forget to turn off the mobile device, it may ring aloud during the screening and annoy neighboring patrons. Should a polite moviegoer who did happen to turn off their mobile device forget to turn it back on after the screening, an important call, email or other event may be missed or its receipt delayed.

US-A-20020142792 discloses a cellular telephone that automatically selects user preference information (e.g. event notification options) based on a sensed condition. The phone automatically changes from one profile to another profile based on a sensed state of the telephone/user (normal, working, meeting, travelling) using a complex finite state machine so that the phone always "knows" what state to apply. Whilst a user can define the profiles to be subsequently used for event notification, enablement of a profile always depends on the condition sensed by the device.

WO03056791-A also provides a complex scheduling mechanism to pre-program profile selection for event notification.

Accordingly, there is a resulting need for a method and apparatus that addresses one or more of these shortcomings.

### GENERAL

The present invention relates to a method and apparatus for controlling user notification of device events in a mobile device.

In accordance with a method aspect and a first embodiment thereof, there is provided a method for a user to control notification of events in a mobile device, comprising: enabling a first user notification profile, said first user notification profile defining notification control options for notifying a user of the occurrence of an event; enabling a switch condition to automatically switch to a second user notification profile; and automatically switching to said second user notification profile in response to the satisfaction of the switch condition, characterized in that said first user notification profile is enabled in response to a user input and to the user defining the switch condition thereby temporarily selecting the first user notification profile for notifying the user of the occurrence of an event.

The switch condition may be defined in relation to a time parameter and/or a location parameter. Also, the method may include storing the switch condition in association with the first user notification profile to facilitate a re-use of a stored switch condition and where defining the switch condition comprises accessing the stored switch condition for re-use.

The method may also include monitoring the satisfaction of the switch condition to determine the automatic switching and may include defining a switch condition by choosing a switch condition option from an edit option dialog.

The method may include the step of enabling a first user notification profile to replace a previously enabled user notification profile with said first user notification profile; and defining said second user notification profile in accordance with said previously enabled user notification profile so that said switching automatically re-enables the previously enabled user notification profile.

In accordance with a device aspect and a first embodiment thereof, there is provided a mobile device for managing events comprising: a user interface for the notification of the events, the notification being controlled by a current one of a plurality of profiles each defining notification options, said user interface comprising: a profile switch component to automatically switch the current profile to a next profile selected from the plurality of profiles in response to a switch condition; and a profile enablement component to selectively enable one of said profiles to be defined as the current profile and to define the switch condition for associating with said current profile, characterized in that the profile enablement component is arranged to be responsive to a user input to selectively enable one of said profiles as the current profile and to allow a user to define the switch condition to thereby temporarily select said current profile for notifying the user of the occurrence of an event.

The profile enablement component may define said switch condition in response to a time parameter and/or a device location parameter.

The user interface may be adapted to store the switch condition in association with the one of the profiles selectively enabled as the current profile to facilitate re-use of the switch condition and the profile enablement component adapted to access the stored switch condition for re-use.

Other features of the device in accordance with the device aspect of the invention will be apparent form the appended claims.

Additional aspects of the invention may include a computer medium bearing a computer program comprising instructions for performing steps in accordance with a method aspect of the invention.

### Brief Description Of The Drawings

Embodiments of the present invention will now be described by way of example with reference to attached figures, wherein:
FIG. 1 is a block diagram which illustrates pertinent components of a wireless communication device which communicates within a wireless communication network in accordance with the prior art;
FIG. 2 is a more detailed diagram of a preferred wireless communication device of FIG. 1 in accordance with the prior art;
FIG. 3 is a schematic diagram of a memory portion of FIG. 2 in accordance with an embodiment of the invention;
FIGS. 4 and 5 are flowcharts which describe a method for a user interface in accordance with an embodiment of the invention; and
FIG. 6 is a flowchart which describes a method for controlling the wireless communication device in accordance with an embodiment of the invention.

### Description of Preferred Embodiments

A mobile device such as a wireless communication device includes a component to automatically switch between profiles defining user notification options for notifying of device events such as new data or voice communications, calendar or alarm events. Switching is automated upon the happening of a switching condition which may be defined in response to time or location information or both. For example, a user may define a profile which disables event notification for a particular duration or while the user is at a particular location. That profile may be expired and automatically switched to another profile to re-enable notification upon the expiry of the duration or change to the location.

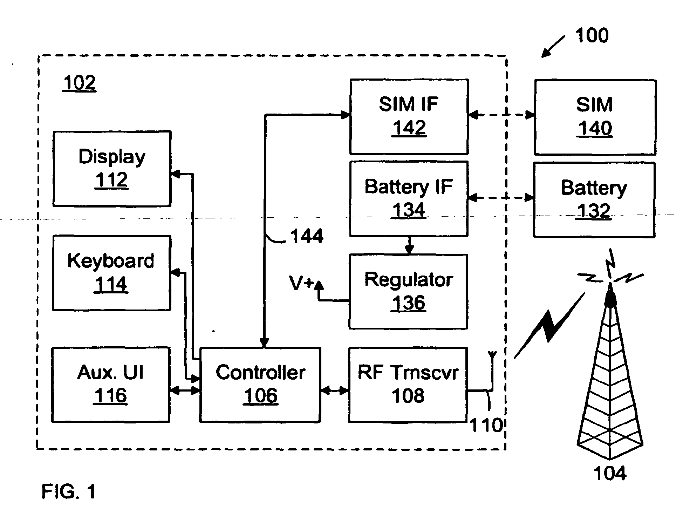

FIG. 1 is a block diagram of a communication system 100 which includes a mobile station 102 which communicates through a wireless communication network symbolized by base station 104. Mobile station 102 preferably includes a visual display 112, a keyboard 114, and perhaps one or more auxiliary user interfaces (UI) 116, each of which are coupled to a controller 106. Controller 106 is also coupled to radio frequency (RF) transceiver circuitry 108 and an antenna 110.

Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from the wireless network 104 over a wireless link via antenna 110. RF transceiver circuitry 108 performs functions similar to those of a base station and a base station controller (BSC) (not shown), including for example modulation/demodulation and possibly encoding/decoding and encryption/decryption. It is also contemplated that RF transceiver circuitry 108 may perform certain functions in addition to those performed by a BSC. It will be apparent to those skilled in art that RF transceiver circuitry 108 will be adapted to particular wireless network or networks in which mobile station 102 is intended to operate.

Mobile station 102 includes a battery interface (IF) 134 for receiving one or more rechargeable batteries 132. Battery 132 provides electrical power to electrical circuitry in mobile station 102, and battery IF 134 provides for a mechanical and electrical connection for battery 132. Battery IF 134 is coupled to a regulator 136 which regulates power to the device. When mobile station 102 is fully operational, an RF transmitter of RF transceiver circuitry 108 is typically turned on only when it is sending to network, and is otherwise turned off or placed in a low-power mode to conserve resources. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface (IF) 142. SIM 140 is one type of a conventional "smart card" used to identify an end user (or subscriber) of mobile station 102 and to personalize the device, among other things. Without SIM 140, the mobile station terminal is not fully operational for communication through the wireless network. By inserting SIM 140 into mobile station 102, an end user can have access to any and all of his/her subscribed services. SIM 140 generally includes a processor and memory for storing information. Since SIM 140 is coupled to SIM IF 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including datebook (or calendar) information and recent call information.

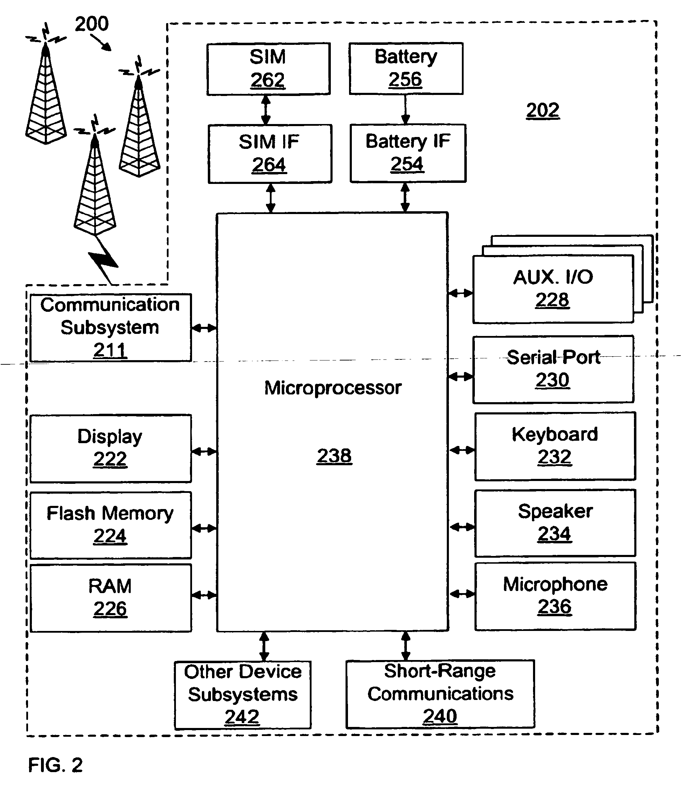

Mobile station 102 may consist of a single unit, such as a data communication device, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of FIG. 2.

FIG. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver stations 200 within its geographic coverage area.

Mobile station 202 will normally incorporate a communication subsystem 211, which includes a receiver, a transmitter, and associated components, such as one or more (preferably embedded or internal) antenna elements and, local oscillators (LOs), and a processing module such as a digital signal processor (DSP) (all not shown).

Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Network access is associated with a subscriber or user of mobile station 202 and therefore mobile station 202 requires a Subscriber Identity Module or "SIM" card 262 to be inserted in a SIM IF 264 in order to operate in the network. SIM 262 includes those features described in relation to FIG. 1. Mobile station 202 is a battery-powered device so it also includes a battery IF 254 for receiving one or more rechargeable batteries 256. Such a battery 256 provides electrical power to most if not all electrical circuitry in mobile station 202, and battery IF 254 provides for a mechanical and electrical connection for it. The battery IF 254 is coupled to a regulator (not shown) which provides power V+ to all of the circuitry.

Mobile station 202 includes a microprocessor 238 (which is one implementation of controller 106 of FIG. 1) which controls overall operation of mobile station 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, will normally be installed on mobile station 202 during its manufacture. A preferred application that may be loaded onto mobile station 202 may be a personal information manager (PIM) application having the ability to organize and manage data items relating to the user such as, but not limited to, instant messaging (IM), e-mail, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network 200, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

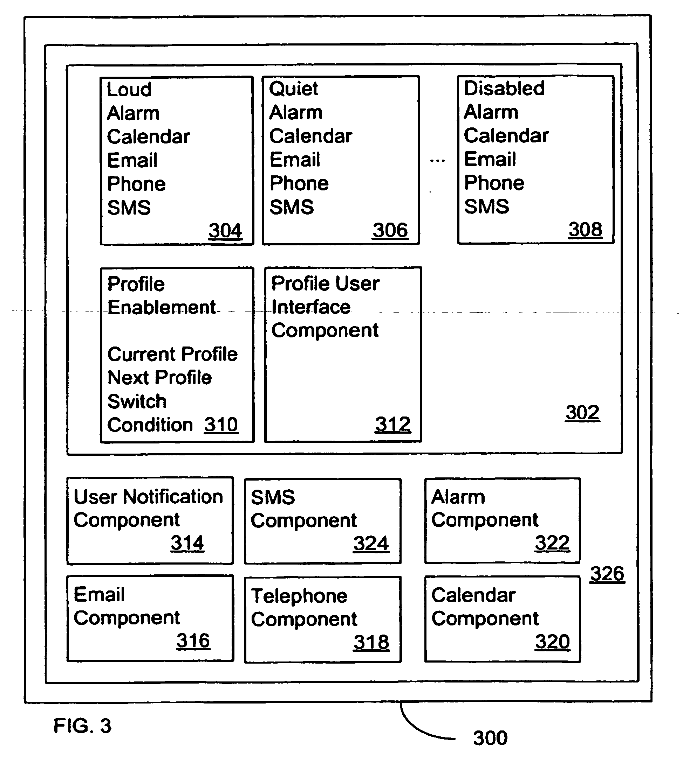

In a data communication mode, a received signal such as a text message, an e-mail message, or web page download will be processed by communication subsystem 211 and input to microprocessor 238. Microprocessor 238 will preferably further process the signal for output to display 222, to auxiliary I/O device 228 or both as described further herein below with reference to Figures 3-6. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

In accordance with an embodiment of the invention, mobile station 202 is a multitasking wireless communications device configured for sending and receiving data items and for making and receiving voice calls. To provide a user-friendly environment to control the operation of mobile station 202, an operating system resident on station 202 (not shown) provides a graphical user interface (GUI) having a main screen and a plurality of sub-screens navigable from the main screen.

Referring now to FIG. 3, there is an illustration of a memory 300 of station 202, in accordance with an embodiment of the invention, showing various software components for controlling mobile station 202. Memory 300 comprises a PIM application component 326 described previously which includes a plurality of event generating and handling components. Examples of such event generating and handling components include an email component 316, telephone component 318, calendar component 320, alarm component 322 and SMS component 324. Persons of ordinary skill in the art will appreciate that one or more additional components may be included (not shown) such as, an address book component, an IM component and a web browser component and that not all of components 316-324 need be included.

PIM application component 326 also provides a user notification component for handling event notification for each of components 316-324. User notification component 314 interfaces with various output or I/O devices of station 202 such as display 222, auxiliary I/O devices 228 and speaker 234. Additionally, user notification component 314 cooperates with profile component 302 which manages profiles such as profiles 304-308 defining user preferences for how various events are to be notified by station 202. Profile component 302 also includes a profile enablement component 310 and a user interface component 312 for configuring profiles 304-308 and profile enablement options of component 310.

In this example embodiment, there are shown three profiles 304-308. Each profile includes options for defining how the user is to be notified for each of the event generating components, namely alarm, calendar, email, phone and SMS options. Profiles are useful to define options for different user scenarios such as different ambient environments, locations or times where a user may desire particular user notification. For example, there is shown a profile 304 including a name identifier "Loud" indicating that the notification options of this group are selected to maximize the intrusiveness of the notification such as increasing volume for audible notifications. Similarly there is a profile 306 having the identifier "Quiet" for defining options which minimize intrusiveness. Finally there is shown a Disabled profile 308 where the options are defined to turn off notification. Preferably, profile component 302 and user interface component 312 permit the definition of additional (i.e. new) profiles to suit user needs.

Persons of ordinary skill in the art will appreciate that a plurality of notification options may be defined for various event types such as email events. For example, the receipt of level one or important email messages may be notified differently from regular email messages events. Details of the notification options per se are omitted and are not important to the scope of the invention.

In accordance with an embodiment of the invention, there is provided a manner of enabling a profile and automatically switching to another profile. In the example embodiment, profile enablement component 310 cooperating with profile user interface component 312 provides a mechanism for defining the current or active profile and a next profile to switch to automatically. As well, these components provide a mechanism to define an expiry or switch condition to determine when the current profile expires to trigger the automatic switching. The switch condition may be defined in response to a time parameter or location parameter or both. A switch condition responsive to time may be defined with respect to a duration (e.g. 140 minutes) or a specific time of day (e.g. 8:00 PM).

A switch condition responsive to location information may be defined relative to the location of the mobile station 202. This current location of the station 202 may be determined relative to a base station 200 with which the mobile station 202 is in communication. For mobile stations 202 including more precise location determining devices such as a Global Positioning Satellite (GPS) subsystem (not shown), the current location may be determined using information from such a device.

Advantageously, a user attending a movie, for example, may pre-set mobile station 202 to expire the current profile at the anticipated end of a movie such as in two hours time. The station 202 may be further pre-set to expire the current profile if the location of the station changes. In this way, on the happening of either the expiry of the duration or the change of location, a prior or other predetermined profile may be enabled as the current profile.

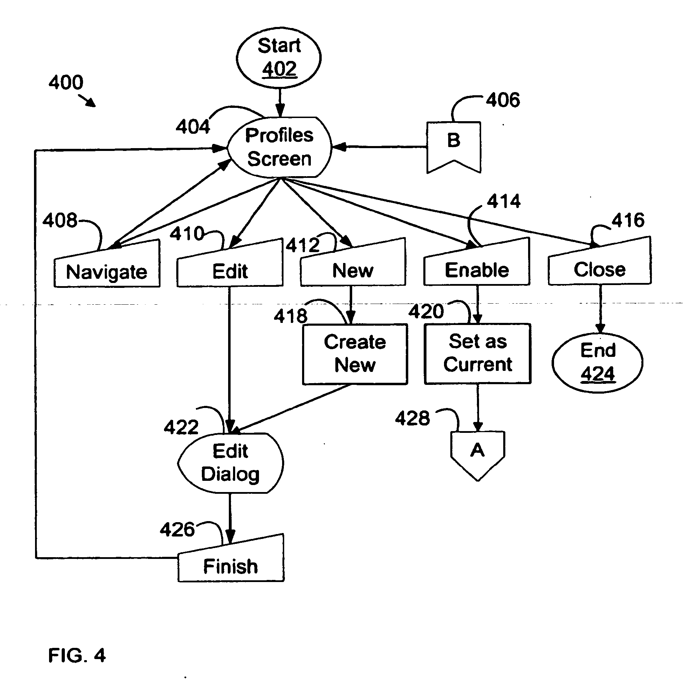

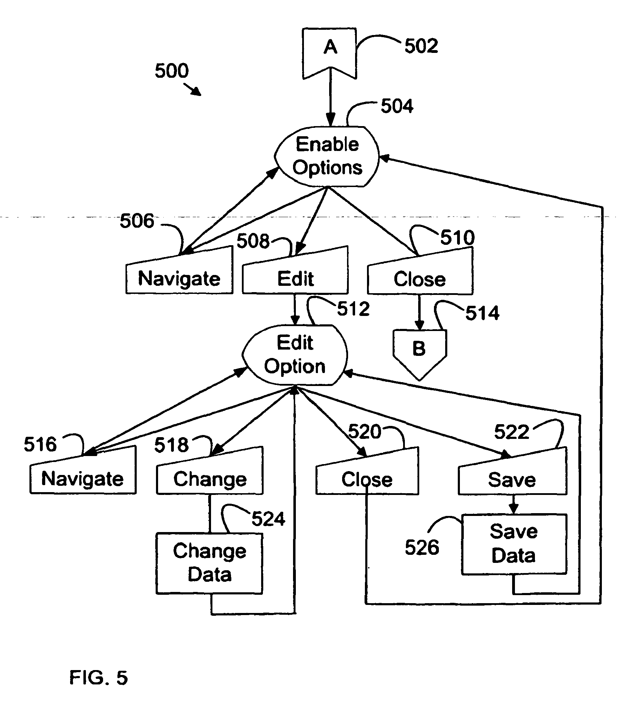

FIGs. 4 and 5 are flowcharts which describe a method in accordance with an embodiment of the invention for a user interface to mobile station 202 for configuring profile options useful to control mobile station 202. FIG. 4 represents operations 400 for generally configuring profiles such as profiles 304-308 while FIG. 5 represents operations 500 for configuring options to enable a profile in accordance with an embodiment of the invention.

Beginning at a start block 402 of FIG. 4, operations 400 commence, for example, by invoking profile user interface component 312 from a main screen (not shown) of a GUI visible on display 222. At step 404 a screen showing the available profiles 304-308 is displayed. From this main screen, a user may navigate among the profiles (step 408) to select a particular profile for further operations. Using the keyboard 232 or other auxiliary I/O devices 228 such as a wheel for moving a cursor or focus about the screen, a user may chose among a plurality of options for a profile such as editing the selected profile (step 410), creating a new profile (step 412), enabling the selected profile (step 414) or closing the profile user interface component 312 (step 416). If a user chooses to edit the selected profile (step 410), an edit dialog is commenced (step 422) and a user may view and edit profile options within the selected profile. For example, the user may select ring tones for a telephone event, set ring volume, etc. At step 426, editing finishes such as by closing the dialog or saving changes and operations loop back to step 404, the display of the available profiles 304-308.

If a user chooses to create a new profile (step 412), the new profile (not shown) for storing to memory 300 is created (step 418) and is preferably populated with default values for each option. Thereafter, the new profile may be passed to editing operations (step 422) to facilitate the selection of user preferences for the options. A user may close the profile screen (step 416) ending the profile operations (step 424).

Should a user wish to enable a selected profile to make it the current profile, operations proceed at step 414. At step 420 the profile currently enabled for controlling notification is set as the value of the next profile of component 310 to enable a switch back to that profile, if desired, and the selected profile is set as the value of the current profile of component 310. Further steps are illustrated in Fig. 5 where outgoing flowchart reference A 428 mates to companion incoming reference A 502.

With reference to FIG. 5, profile enable options are displayed (step 504) and a user may navigate among the options to select a particular option (step 506) for further operations, edit a selected option (step 508), and close the screen (step 510) where outgoing reference B 514 mates to incoming reference B 406 of FIG. 4.

If a user chooses to edit a selected enable option, such as a switch condition for expiring the current profile, an edit option dialog is commenced at step 512. A user may navigate about the dialog (step 516), choose to change a value of the switch condition option (steps 518 and 524), close the dialog without saving (step 520 and then 504) or save the switch condition (steps 522, 526 and then 504).

In the example embodiment, the edit dialog permits a user to choose to enable a switch condition, choosing a condition from among time and location options. Preferably, when a selected profile is enabled as a current profile, the switch condition option of component 310 is populated with a default value which sets the current profile to not expire unless this expiry condition is changed by the user. For example, the switch condition may be defined as NONE which may be interpreted as no expiry for the current profile.

A user may regularly require the temporary selection of a profile, such as when routinely attending a movie theatre or other location or event such as a meeting. The user may desire to define a profile that includes not only the notification options for the profile but also includes saved options for the switch condition. Thus profiles 304-308 may include expiry condition information (not shown). When a particular profile is enabled, the saved switch condition data associated with the profile may be used to populate the active expiry condition of component 310. A shortcut (e.g. invocable from the main screen) to enable such a saved profile may also be desirable.

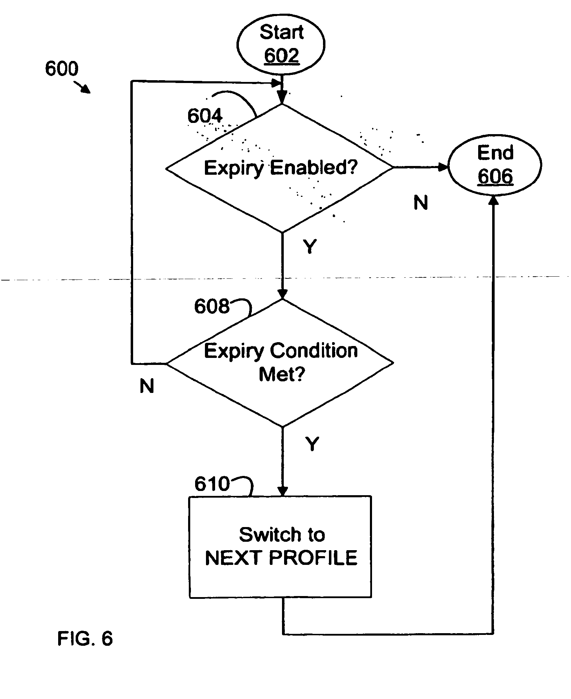

FIG. 6 illustrates a flowchart showing a method in accordance with an embodiment of the invention to control the operation of mobile station 202. FIG. 6 represents operations 600 for automatically switching between a first profile (e.g. current profile) and a second profile (e.g. next profile) upon the satisfaction of a switch condition. Operations start at step 602, for example, upon the enablement of a current profile or change to an enablement option. At step 604, if a switch condition is NONE (i.e. expiry is not enabled), operations may end via No branch to step 606. If the switch condition is enabled, operations proceed via Yes branch where the switch condition is evaluated at step 608.

At step 608, if the switch condition is not met, operations loop via the No branch to step 604. If the switch condition is met, operations continue via the Yes branch to step 610. There, the value of current profile in component 310 is switched with the value of next profile and operations end at step 606. Thus, the current profile may be automatically switched upon the satisfaction of a switch condition. The evaluation of the switch condition will depend on the type of switch condition set (e.g. time or location or both). Persons of ordinary skill in the art will appreciate that many different ways are available to monitor the satisfaction of the switch condition to determine the automatic switching.

Though not shown, operations of event generating and handling components 316-324 and user notification component 314 are proceeding concurrently with operations 600. Profile options of the current profile at any instant may be referenced by user notification component 314 via profile user interface component 312, as necessary, upon the occurrence of a new event. Transparently to these notification operations, the current profile may be switched automatically to control mobile station 202.

Persons of ordinary skill in the art will appreciate that in addition to expiring a current profile as described above, a future profile may be automatically enabled in a similar manner. That is, the switch condition may be defined in relation to a next rather than a current profile. A user may set-up a switch condition which when satisfied initiates enablement of the profile automatically regardless of which profiles is currently enabled. Such enablement may also be responsive to time or location information or both. In this way a user may pre-set mobile station 202 to switch to a specific profile rather than from a profile as described above. Advantageously, the user may set-up the profile to activate at a later time well before the need for the profile arises. For example, the user may make an appointment to see a movie in two days time and pre-set the mobile station in advance to switch to a movie profile for a predetermined duration. Thus the profile may have a switch condition to enable the profile and a switch condition to expire the profile.

Profiles may be initiated by a location-based switch condition as well as a time-based condition. Consider a user who works at a movie theatre, requiring the user to attend the theatre at various dates and times in accordance with a varying work schedule. The user may desire to have a "work" profile that disables audible notification from the station 202. The work profile may be configured with a switch condition that automatically enables the profile when the user attends the theatre location and another switch condition which expires the profile when the user leaves the theatre location.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method for a user to control notification of events in a mobile device (102, 202), comprising:
enabling (414) a first user notification profile (304, 306, 308), said first user notification profile defining notification control options for notifying a user of the occurrence of an event;
enabling a switch condition (310) to automatically switch (610) to a second user notification profile(304, 306, 308); and
automatically switching (610) to said second user notification profile in response to the satisfaction of the switch condition,
**characterized in that** said first user notification profile (304, 306, 308) is enabled in response to a user input (420) and to the user defining the switch condition thereby temporarily selecting the first user notification profile for notifying the user of the occurrence of an event.

2. The method of claim 1 wherein said switch condition is defined in relation to a time parameter and/or a location parameter.

3. The method of claim 1 or 2 further comprising storing the switch condition in association with the first user notification profile (304, 306, 308) to facilitate a re-use of a stored switch condition.

4. The method of claim 3 wherein defining the switch condition comprises accessing the stored switch condition for re-use.

5. The method of any preceding claim further comprising the step of monitoring the satisfaction of the switch condition to determine the automatic switching.

6. The method of any of claims 1 to 5 wherein defining a switch condition comprises choosing a switch condition option (504) from an edit option dialog (512).

7. The method of any of claims 1 to 6 wherein said step of enabling a first user notification profile (304, 306, 308) replaces a previously enabled user notification profile (304, 306, 308) with said first user notification profile; and wherein the method further comprises defining said second user notification profile (304, 306, 308) in accordance with said previously enabled user notification profile so that said switching automatically re-enables the previously enabled user notification profile.

8. A mobile device (102, 202) for managing events comprising:
a user interface for the notification of the events (302), the notification being controlled by a current one (304, 306, 308) of a plurality of profiles (304, 306, 308) each defining notification options, said user interface comprising:
a profile switch component (314, 302) to automatically switch the current profile to a next profile (304, 306, 308) selected from the plurality of profiles in response to a switch condition (310); and
a profile enablement component (314, 312) to selectively enable one of said profiles to be defined as the current profile and to define the switch condition for associating with said current profile,
**characterized in that** the profile enablement component is arranged to be responsive to a user input to selectively enable one of said profiles as the current profile and to allow a user to define the switch condition to thereby temporarily select said current profile for notifying the user of the occurrence of an event.

9. The device of claim 8 wherein the profile enablement component defines said switch condition in response to a time parameter and/or a device location parameter.

10. The device of claim 8 or claim 9 wherein the user interface is adapted to store the switch condition in association with the one of the profiles selectively enabled as the current profile to facilitate re-use of the switch condition.

11. The device of claim 10 wherein the profile enablement component is adapted to access the stored switch condition for re-use.

12. The device of any of claims 8 to 11 wherein the profile enablement component defines the next profile for switching to upon satisfaction of the switch condition and wherein said profile switch component is arranged to switch to the next profile upon satisfaction of the switch condition.

13. The device of any of claims 8 to 12 wherein the next profile is defined in accordance with a last profile enabled immediately prior to the current profile such that said profile switch component switches back to the last profile upon satisfaction of the switch condition.

14. The device of any of claims 8 to 13 further comprising a switch condition monitoring component to monitor the satisfaction of the switch condition to determine whether the automatic switching condition has been satisfied.

15. The device of any of claims 8 to 14, further comprising a wheel for moving a cursor about a display screen (222) to select from a plurality of options for a profile.

16. The device of any of claims 11 to 15, wherein an edit option dialog (512) appears on the user interface to permit a user to choose to enable the switch condition.

17. A computer program product comprising code means adapted to perform, when said program is run on a processor (238) in the mobile device (102, 202) of any of claims 8 9 to 16, all the steps of any of claims 1 to 7.

## Patentansprüche

1. Verfahren für einen Benutzer zum Steuern der Mitteilung von Ereignissen in einem Mobilgerät (102, 202), umfassend:
das Aktivieren (414) eines ersten Benutzermitteilungsprofils (304, 306, 308), wobei dieses erste Benutzermitteilungsprofil die Mitteilungssteuerungsoptionen zum Mitteilen des Auftretens eines Ereignisses an einen Benutzer definiert;
das Aktivieren einer Umschaltbedingung (310) zum automatischen Umschalten (610) zu einem zweiten Benutzermitteilungsprofil (304, 306, 308); und
das automatische Umschalten (610) zu dem zweiten Benutzermitteilungsprofil als Reaktion auf die Erfüllung der Umschaltbedingung;
**dadurch gekennzeichnet, dass** das erste Benutzermitteilungsprofil (304, 306, 308) als Reaktion auf eine Benutzereingabe (420) und auf das Definieren der Umschaltbedingungen durch den Benutzer aktiviert wird, wodurch temporär das erste Benutzermitteilungsprofil zum Mitteilen des Auftretens eines Ereignisses an den Benutzer ausgewählt wird.

2. Verfahren gemäß Anspruch 1, wobei die Umschaltbedingung in Bezug auf einen Zeitparameter und/oder einen Positionsparameter definiert ist.

3. Verfahren gemäß Anspruch 1 oder 2, des Weiteren umfassend das Speichern der Umschaltbedingung in Verbindung mit dem ersten Benutzermitteilungsprofil (304, 306, 308), um die Wiederverwendung einer gespeicherten Umschaltbedingung zu erleichtern.

4. Verfahren gemäß Anspruch 3, wobei das Definieren der Umschaltbedingung das Zugreifen auf die gespeicherte Umschaltbedingung zur Wiederverwendung umfasst.

5. Verfahren gemäß jedem vorherigen Anspruch, des Weiteren umfassend den Schritt des Überwachens der Erfüllung der Umschaltbedingung, um das automatische Umschalten zu bestimmen.

6. Verfahren gemäß jedem der Ansprüche 1 bis 5, wobei das Definieren einer Umschaltbedingung das Auswählen einer Umschaltbedingungsoption (504) aus einem Bearbeitungsoptionsdialog (512) umfasst.

7. Verfahren gemäß jedem der Ansprüche 1 bis 6, wobei der Schritt des Aktivierens eines ersten Benutzermitteilungsprofils (304, 306, 308) ein zuvor aktiviertes Benutzermitteilungsprofil (304, 306, 308) durch das erste Benutzermitteilungsprofil ersetzt; und wobei das Verfahren des Weiteren das Definieren des zweiten Benutzermitteilungsprofils (304, 306, 308) entsprechend dem zuvor aktivierten Benutzermitteilungsprofil umfasst, so dass das Umschalten automatisch das zuvor aktivierte Benutzermitteilungsprofil erneut aktiviert.

8. Mobilgerät (102, 202) zum Verwalten von Ereignissen, umfassend:
eine Benutzeroberfläche zum Mitteilen von Ereignissen (302), wobei das Mitteilen durch ein aktuelles (304, 306, 308) aus einer Vielzahl von Profilen (304, 306, 308) gesteuert wird, die jeweils Mitteilungsoptionen definieren, wobei die Benutzeroberfläche umfasst:
eine Profilumschaltkomponente (314, 302) zum automatischen Umschalten des aktuellen Profils zu einem nächsten Profil (304, 306, 308), das als Reaktion auf eine Umschaltbedingung (310) aus einer Vielzahl von Profilen ausgewählt wird; und
eine Profilaktivierungskomponente (314, 312) zum selektiven Aktivieren von einem der Profile, um als das aktive Profil definiert zu werden, und zum Definieren der Umschaltbedingung zum Verbinden mit dem aktuellen Profil;
**dadurch gekennzeichnet, dass** die Profilaktivierungskomponente so eingerichtet ist, dass sie auf eine Benutzereingabe reagiert, um eines der Profile selektiv als das aktuelle Profil zu aktivieren, und dass sie einem Benutzer ermöglicht, die Umschaltbedingung zu definieren, um **dadurch** das aktuelle Profil zum Mitteilen des Auftretens eines Ereignisses an den Benutzer temporär auszuwählen.

9. Gerät gemäß Anspruch 8, wobei die Profilaktivierungskomponente die Umschaltbedingung als Reaktion auf einen Zeitparameter und/oder einen Gerätepositionsparameter definiert.

10. Gerät gemäß Anspruch 8 oder Anspruch 9, wobei die Benutzeroberfläche zum Speichern der Umschaltbedingung in Verbindung mit dem einen der Profile angepasst ist, das selektiv als das aktive Profil aktiviert ist, um die Wiederverwendung der Umschaltbedingung zu erleichtern.

11. Gerät gemäß Anspruch 10, wobei die Profilaktivierungskomponente zum Zugreifen auf die gespeicherte Umschaltbedingung zur Wiederverwendung angepasst ist.

12. Gerät gemäß jedem der Ansprüche 8 bis 11, wobei die Profilaktivierungskomponente das nächste Profil definiert, zu dem bei Erfüllung der Umschaltbedingung umgeschaltet wird, und wobei die Profilumschaltkomponente so eingerichtet ist, dass sie bei Erfüllung der Umschaltbedingung zum nächsten Profil umschaltet.

13. Gerät gemäß jedem der Ansprüche 8 bis 12, wobei das nächste Profil entsprechend einem letzten Profil definiert wird, das unmittelbar vor dem aktiven Profil aktiviert war, so dass die Profilumschaltkomponente bei Erfüllung der Umschaltbedingung zum letzten Profil zurückschaltet.

14. Gerät gemäß jedem der Ansprüche 8 bis 13, des Weiteren umfassend eine Umschaltbedingungsüberwachungskomponente zum Überwachen der Erfüllung der Umschaltbedingung, um zu bestimmen, ob die automatische Umschaltbedingung erfüllt wurde.

15. Gerät gemäß jedem der Ansprüche 8 bis 14, des Weiteren umfassend ein Rad zum Bewegen eines Cursors über einen Display-Bildschirm (222), um eine Auswahl aus einer Vielzahl von Optionen für ein Profil zu treffen.

16. Gerät gemäß jedem der Ansprüche 11 bis 15, wobei ein Bearbeitungsoptionsdialog (512) auf der Benutzeroberfläche erscheint, um es einem Benutzer zu ermöglichen, die Auswahl zum Aktivieren der Umschaltbedingung zu treffen.

17. Computerprogrammprodukt, umfassend Codemittel, die dazu angepasst sind, bei Ausführung des Programms auf einem Prozessor (238) in dem Mobilgerät (101, 202) gemäß jedem der Ansprüche 8 bis 16 alle Schritte gemäß jedem der Ansprüche 1 bis 7 durchzuführen.

## Revendications

1. Un procédé permettant à un utilisateur de commander la notification d'événements sur un dispositif mobile (102, 202), comprenant :
l'activation (414) d'un premier profil de notification d'utilisateur (304, 306, 308), ledit premier profil de notification d'utilisateur définissant des options de commande de notification destinées à notifier à un utilisateur la survenue d'un événement,
l'activation d'une condition de commutation (310) destinée à commuter automatiquement (610) vers un deuxième profil de notification d'utilisateur (304, 306, 308), et
la commutation automatique (610) vers ledit deuxième profil de notification d'utilisateur en réponse à la satisfaction de la condition de commutation,
**caractérisé en ce que** ledit premier profil de notification d'utilisateur (304, 306, 308) est activé en réponse à une entrée d'utilisateur (420) et à l'utilisateur définissant la condition de commutation, sélectionnant ainsi temporairement le premier profil de notification d'utilisateur afin de notifier à l'utilisateur la survenue d'un événement.

2. Le procédé selon la Revendication 1 où ladite condition de commutation est définie en relation avec un paramètre de temps et/ou un paramètre d'emplacement.

3. Le procédé selon la Revendication 1 ou 2 comprenant en outre la conservation en mémoire de la condition de commutation en association avec le premier profil de notification d'utilisateur (304, 306, 308) afin de permettre une réutilisation d'une condition de commutation conservée en mémoire.

4. Le procédé selon la Revendication 3 où la définition de la condition de commutation comprend l'accès à la condition de commutation conservée en mémoire pour une réutilisation.

5. Le procédé selon l'une quelconque des Revendications précédentes comprenant en outre l'opération de surveillance de la satisfaction de la condition de commutation afin de déterminer la commutation automatique.

6. Le procédé selon l'une quelconque des Revendications 1 à 5 où la définition d'une condition de commutation comprend le choix d'une option de condition de commutation (504) dans une boîte de dialogue Editer options (512).

7. Le procédé selon l'une quelconque des Revendications 1 à 6 où ladite opération d'activation d'un premier profil de notification d'utilisateur (304, 306, 308) remplace un profil de notification d'utilisateur activé antérieurement (304, 306, 308) par ledit premier profil de notification d'utilisateur, et où le procédé comprend en outre la définition dudit deuxième profil de notification d'utilisateur (304, 306, 308) conformément audit profil de notification d'utilisateur activé antérieurement, de sorte que ladite commutation réactive automatiquement le profil de notification d'utilisateur activé antérieurement.

8. Un dispositif mobile (102, 202) destiné à gérer des événements comprenant :
une interface utilisateur destinée à la notification d'événements (302), la notification étant commandée par un profil actuel (304, 306, 308) d'une pluralité de profils (304, 306, 308), chaque profil définissant des options de notification, ladite interface utilisateur comprenant :
une composante de commutation de profil (314, 302) destinée à commuter automatiquement le profil actuel vers un profil suivant (304, 306, 308) sélectionné parmi la pluralité de profils en réponse à une condition de commutation (310), et
une composante d'activation de profil (314, 312) destinée à activer sélectivement l'un desdits profils à définir comme étant le profil actuel et destinée à définir la condition de commutation à associer audit profil actuel,
**caractérisé en ce que** la composante d'activation de profil est agencée de façon à réagir à une entrée d'utilisateur afin d'activer sélectivement l'un desdits profils en tant que profil actuel et d'autoriser un utilisateur à définir la condition de commutation afin ainsi de sélectionner temporairement ledit profil actuel pour notifier à l'utilisateur la survenue d'un événement.

9. Le dispositif selon la Revendication 8 où la composante d'activation de profil définit ladite condition de commutation en réponse à un paramètre de temps et/ou un paramètre d'emplacement de dispositif.

10. Le dispositif selon la Revendication 8 ou 9 où l'interface utilisateur est adaptée de façon à conserver en mémoire la condition de commutation en association avec le profil activé sélectivement comme étant le profil actuel afin de permettre une réutilisation de la condition de commutation.

11. Le dispositif selon la Revendication 10 où la composante d'activation de profil est adaptée de façon à accéder à la condition de commutation conservée en mémoire pour une réutilisation.

12. Le dispositif selon l'une quelconque des Revendications 8 à 11 où la composante d'activation de profil définit le profil suivant vers lequel commuter en cas de satisfaction de la condition de commutation et où ladite composante de commutation de profil est agencée de façon à commuter vers le profil suivant en cas de satisfaction de la condition de commutation.

13. Le dispositif selon l'une quelconque des Revendications 8 à 12 où le profil suivant est défini conformément à un dernier profil activé immédiatement avant le profil actuel, de façon que ladite composante de commutation de profil recommute vers le dernier profil en cas de satisfaction de la condition de commutation.

14. Le dispositif selon l'une quelconque des Revendications 8 à 13 comprenant en outre une composante de surveillance de condition de commutation afin de surveiller la satisfaction de la condition de commutation pour déterminer si la condition de commutation automatique a été satisfaite.

15. Le dispositif selon l'une quelconque des Revendications 8 à 14 comprenant en outre une molette destinée à déplacer un curseur sur un écran d'affichage (222) afin d'effectuer une sélection parmi une pluralité d'options destinées à un profil.

16. Le dispositif selon l'une quelconque des Revendications 11 à 15 où une boîte de dialogue Editer options (512) s'affiche sur l'interface utilisateur afin de permettre à un utilisateur de choisir d'activer la condition de commutation.

17. Un programme informatique comprenant un moyen de code adapté de façon à exécuter, lorsque ledit programme est exécuté sur un processeur (238) du dispositif mobile (102, 202) selon l'une quelconque des Revendications 8 à 16, toutes les opérations selon l'une quelconque des Revendications 1 à 7.
